# FASCICULE DE BREVET EUROPEEN

(11) **EP 2 154 040 B1**
(45) Date de publication et mention de la délivrance du brevet: **28.11.2012**
(21) Numéro de dépôt: 09290617.1
(22) Date de dépôt: 05.08.2009
(51) Int. Cl.: B60T 17/08

(54) **Actionneur de frein de parking ou de secours pour frein à déverrouillage à billes**
Bremsstellglied zum Parken oder Notbremsstellglied für Bremse mit Kugelauslösung
Parking or emergency brake actuator for a brake with unlocking by balls

(30) Priorité: 13.08.2008 FR 0855561
(43) Date de publication de la demande: 17.02.2010
(73) Titulaire: Faiveley Transport Amiens, 80000 Amiens (FR)
(72) Inventeur: Brugait, Jean-Louis, 80300 Albert (FR); Beauvois, Damien, 80000 Amiens (FR); Goncalves, Claudino, 80620 Ribeaucourt (FR)
(74) Mandataire: Lepelletier-Beaufond, François

(56) Documents cités:
- EP-A- 0 206 520
- BE-A1- 852 864
- DE-A1- 3 101 608
- FR-A- 2 473 440
- GB-A- 1 166 544

## Description

L'invention concerne le domaine du freinage des véhicules.

Elle concerne plus particulièrement un actionneur de frein de parking ou de secours adapté à verrouiller un cylindre de frein tel que celui rencontré sur les véhicules ferroviaires.

Les véhicules ferroviaires sont généralement équipés de freins comportant un piston mobile sous l'effet d'un fluide sous pression, le déplacement de ce piston entraînant une action de freinage telle que le serrage d'un disque de frein entre deux patins, ou la pression directe d'un patin contre une roue du véhicule.

Ces cylindres de frein comportent également généralement un actionneur de parking ou de secours qui est activé en cas de perte de pression du fluide sous pression, en cas de vidange volontaire ou de fuite du système pneumatique, et permet d'assurer le freinage grâce à la force d'un ressort se substituant à la force du fluide. Une fois cet actionneur activé, le frein reste serré en permanence, tandis que des actions de maintenance doivent être menées pour identifier et supprimer la cause de défaillance du circuit de fluide sous pression.

Cependant, il peut être nécessaire, notamment pendant ces opérations de maintenance, de déplacer le véhicule dont l'actionneur a été activé, et il est pour cela nécessaire de déverrouiller l'actionneur.

On connaît des documents FR 2 473 440, EP 0 206 520et BE 852 864 des dispositifs d'actionnement pour frein de roue de véhicule, ces dispositifs comportant des moyens de déclenchement permettant un tel déverrouillage du frein lorsqu'une action de freinage de secours a eu lieu.

Ces dispositifs comportent :
- un manchon de poussée adapté à agir sur ledit cylindre de frein ;
- un coulisseau monté mobile axialement dans le manchon de poussée entre une position de verrouillage et une position de déverrouillage ;
- un piston adapté à être entrainé par des moyens élastiques et lié à un organe d'accrochage ;
- une pluralité de billes disposées dans une ouverture du manchon entre le coulisseau et l'organe d'accrochage, commandées en position par une surface latérale du coulisseau pour :
   - lorsque le coulisseau est en position de verrouillage, adopter une position saillante vis-à-vis du manchon où elles sont engagées dans un renfoncement de l'organe d'accrochage ; et
   - lorsque le coulisseau est en position de déverrouillage, adopter une position rétractée vis-à-vis du manchon où elles sont dégagées de l'organe d'accrochage ;
grâce à quoi lorsque le coulisseau est en position de verrouillage, l'organe d'accrochage entraine axialement le manchon de poussée et lorsque le coulisseau est en position de déverrouillage, l'organe d'accrochage est axialement désaccouplé du manchon de poussée.

La surface latérale du coulisseau comporte un tronçon cylindrique sur lequel repose les billes lorsque le coulisseau est en position de verrouillage et un tronçon évidé formant une gorge annulaire de plus petit diamètre pour recevoir à engagement ces billes lorsque le coulisseau est en position de déverrouillage.

L'invention vise à d'améliorer les performances de ce type de dispositifs, notamment en matière de fiabilité et de longévité.

A cet effet, l'invention vise un actionneur de frein de parking ou de secours adapté à verrouiller un cylindre de frein ferroviaire, cet actionneur comportant :
- un manchon de poussée adapté à agir sur ledit cylindre de frein ;
- un coulisseau monté mobile axialement dans le manchon de poussée entre une position de verrouillage et une position de déverrouillage ;
- un piston adapté à être entrainé par des moyens élastiques et lié à un organe d'accrochage ;
- une pluralité de billes disposées dans une ouverture du manchon entre le coulisseau et l'organe d'accrochage, commandées en position par une surface latérale du coulisseau pour :
   - lorsque le coulisseau est en position de verrouillage, adopter une position saillante vis-à-vis du manchon où elles sont engagées dans un renfoncement de l'organe d'accrochage ; et
   - lorsque le coulisseau est en position de déverrouillage, adopter une position rétractée vis-à-vis du manchon où elles sont dégagées de l'organe d'accrochage ;
grâce à quoi lorsque le coulisseau est en position de verrouillage, l'organe d'accrochage entraine axialement le manchon de poussée et lorsque le coulisseau est en position de déverrouillage, l'organe d'accrochage est axialement désaccouplé du manchon de poussée ;
caractérisé en ce que la surface latérale du coulisseau comporte pour chaque bille un renfoncement de verrouillage respectif pour recevoir à engagement cette bille lorsque le coulisseau est en position de verrouillage, chaque dit renfoncement de verrouillage étant orienté axialement et présentant une section transversale en arc de cercle de rayon semblable à celui de la bille, grâce à quoi la bille est en contact avec la surface dudit renfoncement de verrouillage sur une ligne en arc de cercle.

Dans les dispositifs antérieurs susmentionnés, le contact dans la position de verrouillage du coulisseau, entre une bille et la surface latérale de ce coulisseau est relativement ponctuel (sphère sur surface cylindrique). De ce fait, au bout d'une certaine période d'utilisation, un matage c'est-à-dire une déformation du coulisseau autour de son point de contact avec une telle bille, est susceptible de se produire, ce qui est susceptible de gêner, voire d'empêcher le désaccouplement du manchon de poussée.

Dans le dispositif selon l'invention, chaque bille en position de verrouillage est engagée dans un renfoncement spécifique ménagé en creux à la surface latérale du coulisseau. La prévision d'un tel renfoncement permet d'agrandir de façon extrêmement significative la zone de contact entre une telle bille et le coulisseau et ainsi d'éviter tout matage ou en tout cas de réduire considérablement les risques de matage de ce coulisseau susceptibles d'entraîner le blocage du mécanisme d'actionnement.

Selon des caractéristiques préférées pour des raisons de simplicité et de commodité tant à la fabrication qu'à l'utilisation :
- ladite surface latérale comporte, pour chacune des billes, un renfoncement de déverrouillage respectif pour recevoir à engagement cette bille lorsque le coulisseau est en position de déverrouillage, chaque dit renfoncement de déverrouillage étant orienté axialement et présentant une section transversale en arc de cercle de rayon semblable à celui de la bille, grâce à quoi la bille est en contact avec la surface dudit renfoncement de déverrouillage sur une ligne en arc de cercle ;
- ladite surface latérale comporte, pour chacune des billes, une gorge d'accueil orientée axialement et comportant ledit renfoncement de verrouillage, ledit renfoncement de déverrouillage et une rampe entre ledit renfoncement de verrouillage et ledit renfoncement de déverrouillage ;
- ladite rampe présente une section transversale en arc de cercle de rayon semblable à celui de la bille, grâce à quoi la bille est en contact avec la surface de ladite rampe sur une ligne en arc de cercle ;
- ladite rampe est inclinée vis-à-vis de l'axe du coulisseau selon une pente d'environ 45°;
- ledit organe d'accrochage comporte une portée torique présentant une section transversale en arc de cercle de rayon semblable à celui des billes, grâce à quoi le contact entre chaque bille et ladite portée torique s'effectue selon une ligne en arc de cercle ;
- lesdites ouvertures sont circulaires et présentent un diamètre semblable à celui des billes, grâce à quoi chaque bille est en contact avec le pourtour d'une respective ouverture sur une ligne en arc de cercle ;
- ledit actionneur comporte six dites billes disposées respectivement dans six dites ouvertures circulaires réparties régulièrement sur le pourtour dudit manchon ;
- lesdits moyens élastiques sont des ressorts ;
- ledit actionneur comporte un dispositif de déverrouillage adapté à entrainer le coulisseau de sa position de verrouillage à sa position de déverrouillage ;
- ledit dispositif de déverrouillage comporte un levier présentant une embase bombée en contact avec le sommet dudit coulisseau, ledit levier étant adapté à basculer grâce à un organe de commande de sorte à repousser ledit coulisseau en position de déverrouillage ;
- ledit dispositif de déverrouillage comporte également des moyens d'actionnement disposés entre ledit levier et ledit organe de commande ;
- ledit dispositif de déverrouillage comporte un corps disposé dans l'axe dudit coulisseau et adapté à le repousser en position de déverrouillage grâce à un organe de commande ;
- ledit organe de commande est une extrémité dudit corps, adapté à être frappé par une masse ;
- ledit organe de commande est un piston pneumatique.

D'autres caractéristiques et avantages de l'invention apparaissent à la lumière de la description qui va suivre d'un mode de réalisation préféré, donné à titre d'exemple non limitatif, description faite en référence aux dessins annexés, dans lesquels :
- la figure 1 est une vue en coupe d'un actionneur de frein de parking ou de secours accouplé à un cylindre de frein ferroviaire ;
- les figures 2 et 3 illustrent schématiquement les principes de fonctionnement d'une timonerie de frein ferroviaire actionnée par un cylindre de frein, ce cylindre de frein étant respectivement en position d'attente (figure 2) et en position de freinage (figure 3) ;
- la figure 4 est une vue en perspective de l'ensemble formé par le manchon de poussée, le coulisseau, les billes de transmission, et l'organe d'accrochage de l'actionneur de la figure 1 ;
- la figure 5 est une vue en coupe longitudinale du coulisseau des figures 1 et 4 ;
- les figures 6 à 8 sont des demi-vues en coupe de l'actionneur de la figure 1, et ce pour différentes positions de fonctionnement ;
- la figure 9 est une vue agrandie de l'encart IX de la figure 7
- les figures 10 et 11 sont des vues en coupe de l'ensemble de la figure 4 selon les plans repérés respectivement par X-X et par XI-XI ;
- les figures 12 et 13 sont des demi-vues en coupe de l'actionneur de la figure 1 équipé d'un dispositif de déverrouillage, respectivement en position verrouillée et déverrouillée ;
- les figures 14 et 15 sont des vues schématiques simplifiées en coupe d'un actionneur semblable à celui de la figure 1 mais équipé d'un dispositif de déverrouillage manuel, respectivement en position verrouillée et déverrouillée ; et
- les figures 16 et 17 sont des vues schématiques simplifiées en coupe d'un actionneur semblable à celui de la figure 1 mais équipé d'un dispositif de déverrouillage pneumatique, respectivement en position verrouillée et déverrouillée.

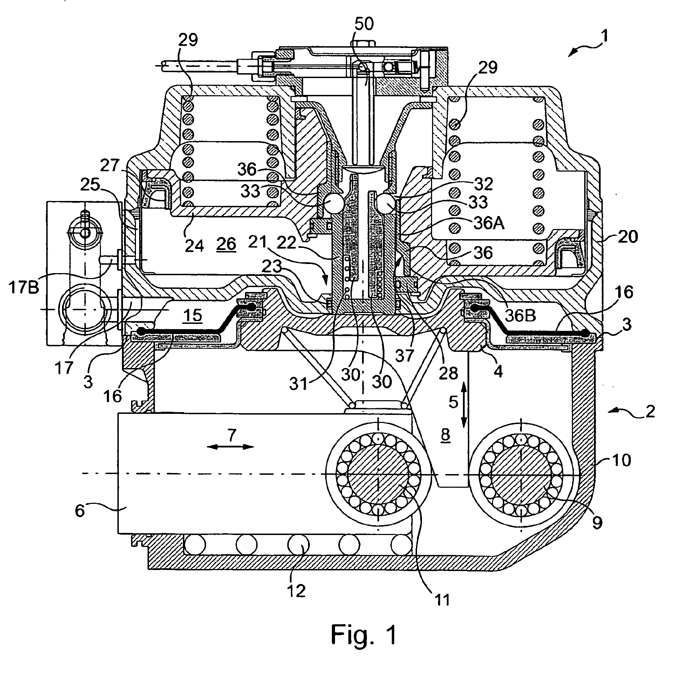

La figure 1 représente un actionneur de frein de parking ou de secours 1 accouplé à un cylindre de frein ferroviaire 2 au niveau d'un plan de raccordement 3.

Le cylindre de frein 2 comporte notamment un piston 4 mobile selon une première direction axiale 5, une tige de poussée 6 mobile suivant une deuxième direction axiale 7 perpendiculaire à la première direction axiale 5.

Le piston 4 est attaché à une pièce de coin 8 présentant une section triangulaire et qui est adaptée à coopérer avec une première butée à roulement 9 reliée au corps 10 du cylindre de frein 2 et avec une deuxième butée à roulement 11 reliée à la tige de poussée 6.

Un ressort 12 illustré ici de manière très simplifiée, est disposé entre le corps 10 et la tige de poussée 6 afin de rappeler la deuxième butée à roulement 11 contre la pièce de coin 8.

Le cylindre de frein 2 comporte également une chambre de pression 15 délimitée par le piston 4, la membrane 16 et par l'actionneur 1 accouplé au cylindre 2.

Cette chambre 15 est raccordée par un conduit 17 à une source de fluide sous pression telle que, par exemple, un circuit pneumatique.

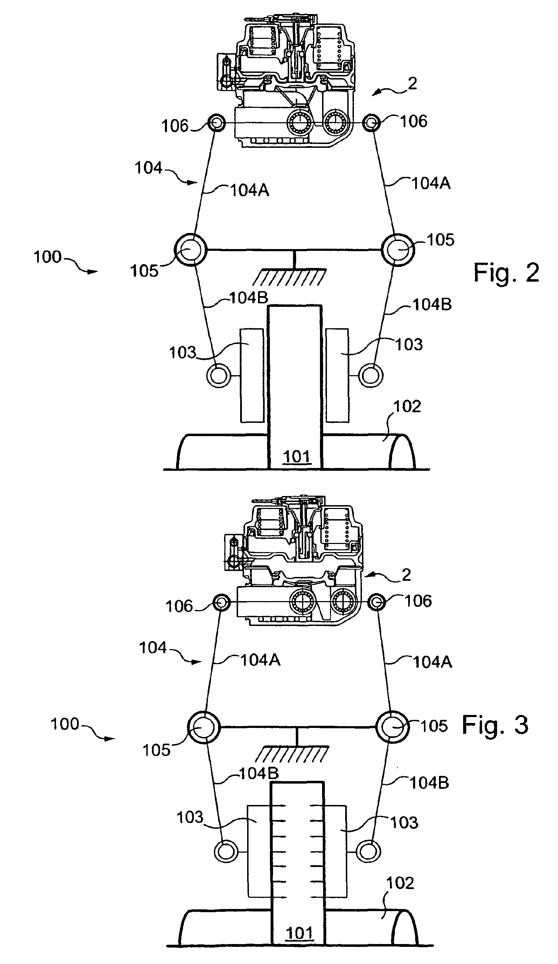

Un tel cylindre de frein 2 permet d'agir via une timonerie de frein ferroviaire 100 sur un disque de frein 101 monté par exemple sur un essieu 102 du véhicule ferroviaire, ou directement sur la roue à freiner (figures 2 et 3). Le disque de frein 101 est ici vu de profil et seule sa moitié supérieure a été représentée.

La timonerie 100 comporte de manière classique deux patins de freinage 103 disposés de part et d'autre du disque de frein 101 et qui, en l'absence de sollicitation, sont à l'écart du disque de frein 101 (voir figure 2) et qui, lors d'une action de freinage, sont sollicités par la timonerie 100 contre le disque de frein 101 (voir figure 3) pour ralentir et/ou stopper le disque de frein 101 par friction.

La timonerie 100 comporte à cet effet deux leviers 104 rigides comportant chacun un bras supérieur 104A et un bras inférieur 104B solidaires, chaque levier 104 étant monté en rotation autour d'un axe 105 solidaire du châssis du véhicule ferroviaire. Le bras inférieur 104B de chaque levier 104 est relié à l'un des patins de freinage 103. Le bras supérieur 104A de chaque levier 104 est quant à lui relié à une articulation 106.

Le cylindre de frein 2 est monté entre les deux articulations 106, le corps 10 étant solidaire de l'une de ces articulations 106 et l'extrémité de la tige de poussée 6 étant solidaire de l'autre articulation 106.

On va dans un premier temps, à l'appui des figures 2 et 3, expliquer le fonctionnement du cylindre de frein 2 en supposant à ce stade que l'actionneur 1 est désactivé.

Sur la figure 2, le cylindre de frein 6 est représenté en position d'attente. Dans cette position, la pression de fluide n'est pas exercée, c'est-à-dire que le conduit 17 est mis à la pression atmosphérique. La chambre de pression 15 présente alors un volume minimal, le ressort 12 qui sollicite la deuxième butée à roulement 11 en direction de la première butée à roulement 9 provoquant la montée de la pièce de coin 8 et du piston 4.

Sur la figure 3, le cylindre de frein 6 est représenté en position de freinage. Le conduit 17 reçoit le fluide sous pression qui remplit la chambre de pression 15 et sollicite le piston 4 et la pièce de coin 8 vers le bas, ce qui a pour effet d'écarter l'une de l'autre les butées 9 et 11 donc les articulations 106. Le volume de la chambre de pression 15 est maximal dans cette position.

Dès que la pression du fluide est supprimée au conduit 17, le cylindre de frein 2 revient à sa position d'attente de la figure 2 sous l'effet du ressort 12 en chassant le fluide de la chambre de pression 15.

On va maintenant décrire l'actionneur 1, objet de l'invention. Il comporte un corps 20 présentant une ouverture 21 en vis-à-vis du piston 4. L'ouverture 21 est une ouverture circulaire recevant à coulissement un manchon de poussée 22 s'ajustant dans l'ouverture 21 de manière étanche grâce à un joint torique 23.

L'actionneur 1 comporte également un piston 24 monté mobile dans un cylindre 25 solidaire du corps 20 et délimitant avec le corps 20 une chambre de pression 26. Cette chambre de pression est alimentée en fluide sous pression par un conduit 17B. Le piston 24 est mobile entre une position haute et une position basse. La vue en coupe de cette figure 1 est une vue schématique grâce à laquelle la moitié gauche du piston 24 est représentée en position haute, tandis que la moitié droite du piston 24 est représentée en position basse.

L'étanchéité entre le piston 24 et le cylindre 25 est garantie par un joint 27.

Le piston 24 comporte en son centre un orifice traversé par le manchon de poussée 22. L'étanchéité entre le manchon de poussée 22 et le piston 24 est assurée par un joint 28.

Des moyens élastiques, formés dans le présent exemple par des ressorts 29, sollicitent en permanence le piston 24 vers sa position basse.

Un coulisseau 30 est de plus disposé à l'intérieur du manchon de poussée 22 de manière à être mobile entre une position haute et une position basse. De même que pour le piston 24, le coulisseau 30 a également été ici représenté selon une vue schématique dans laquelle la moitié gauche du coulisseau 30 est représentée en position haute, ci-après dénommée position de verrouillage, tandis que la moitié droite du coulisseau 30 est représentée en position basse, ci-après dénommée position de déverrouillage.

Le coulisseau 30 est en permanence sollicité vers sa position de verrouillage par un ressort 31 disposé entre le coulisseau 30 et le manchon de poussée 22.

L'actionneur 1 comporte également un organe d'accrochage 36 fixé sur le piston 24 et qui enveloppe le manchon de poussée 22 (en variante, l'organe d'accrochage 36 peut être usiné d'un seul tenant avec le piston 24). Cet organe d'accrochage 36 comporte une première portion annulaire 36A entourant le manchon 22 et présentant un diamètre interne semblable au diamètre externe du manchon 22 de sorte qu'il puisse à coulisser le long de ce dernier. L'organe d'accrochage 36 comporte également une seconde portion annulaire 36B présentant un diamètre interne supérieur de sorte à former un renfoncement, les deux portions 36A et 36B étant reliées l'une à l'autre par une portion intermédiaire évasée et formant du côté interne, une portée torique 37.

L'actionneur 1 comporte six billes 33 disposées chacune dans une ouverture circulaire respective 32 du manchon 22 entre le coulisseau 30 et l'organe d'accrochage 36. Les six ouvertures 32 sont réparties régulièrement sur le pourtour du manchon 22 et s'étendent transversalement à son axe longitudinal.

Les six billes 33 qui présentent un diamètre semblable à ceux des ouvertures 32 (en pratique très légèrement inférieur pour permettre le jeu de fonctionnement) et de la section transversale de la portée torique 37, sont adaptées à occuper une position saillante correspondant à la position de verrouillage du coulisseau 30 ainsi qu'une position rétractée correspondant à la position de déverrouillage du coulisseau 30.

Lorsque le coulisseau 30 est en position de verrouillage, l'organe d'accrochage 36 est apte à entrainer axialement le manchon de poussée 22 par l'intermédiaire de ces billes 33 (partie gauche de la figure 1). A l'inverse, lorsque le coulisseau 30 est en position de déverrouillage, l'organe d'accrochage 36 est axialement désaccouplé du manchon de poussée 22 (partie droite de la figure 1).

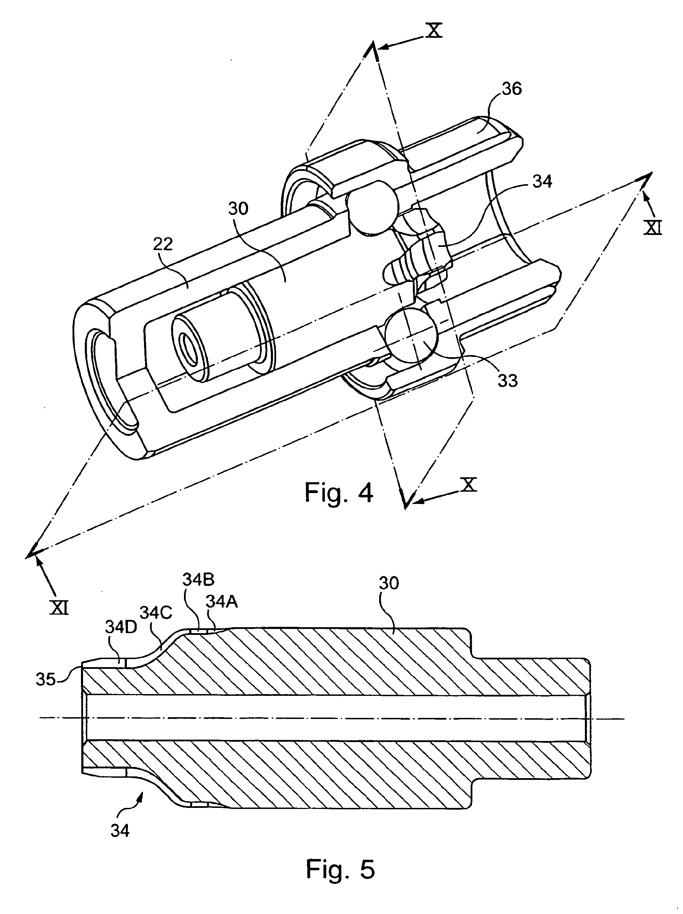

Le coulisseau 30 comporte à son extrémité opposée au ressort 31 une surface latérale qui est formée de six gorges d'accueil 34 s'étendant chacune suivant l'axe de ce coulisseau 30 (figure 4) et réparties régulièrement sur son pourtour.

Chaque gorge 34 s'étend depuis une première extrémité 34A en portion de sphère (correspondant à la géométrie de l'outil ayant servi à usiner cette gorge) jusqu'à l'extrémité libre 35 du coulisseau 30 (figure 5). En variante, l'extrémité 34A peut avoir une forme différente, par exemple tronconique ou cubique.

A partir de son extrémité 34A, chaque gorge 34 présente un renfoncement de verrouillage 34B qui s'étend parallèlement à l'axe du coulisseau 30 jusqu'à une rampe 34C. Celle-ci se rapproche radialement de l'axe du coulisseau 30 en suivant une pente de 45°. En variante, l'angle de la pente peut-être différent, par exemple compris entre 20 et 60°. Au-delà de la rampe 34C, chaque gorge 34 se prolonge par un renfoncement de déverrouillage 34D qui s'étend parallèlement à l'axe du coulisseau 30 jusqu'à son extrémité libre 35.

A l'exception de son extrémité sphérique 34A, chaque gorge 34 présente sur toute sa longueur, une section transversale en arc de cercle dont le rayon de courbure reste constant. Ce rayon est semblable à celui des billes 33 (en pratique très légèrement supérieur pour permettre le jeu de fonctionnement), de sorte que celles-ci sont adaptées à parcourir une gorge 34 de l'une à l'autre de ses extrémités en présentant avec ce dernier et ce quelque soit leur position, une ligne de contact en arc de cercle correspondant à son profil à cet endroit.

L'actionneur 1 comporte enfin un dispositif de déverrouillage 50 qui est adapté à repousser le coulisseau 30 dans le manchon de poussée 22 en comprimant le ressort 31. Le dispositif de déverrouillage 50 est donc adapté à entrainer le coulisseau 30 de sa position de verrouillage (sur la moitié gauche de la figure 1) à sa position de déverrouillage (sur la moitié droite de la figure 1).

Ce dispositif de déverrouillage 50 ainsi que certaines variantes seront décrits en détail plus loin.

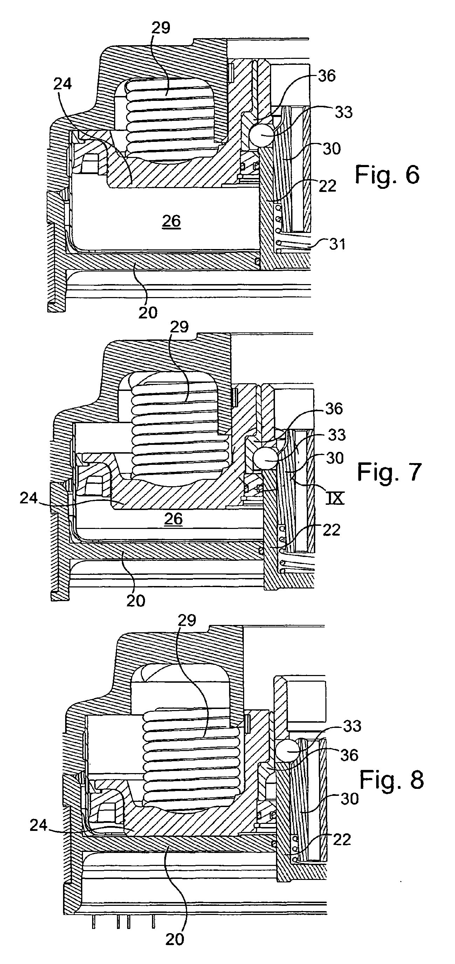

On va maintenant décrire le fonctionnement de l'actionneur 1 à l'appui des figures 6 à 8.

Sur la figure 6, l'actionneur 1 est à l'état d'attente. Le circuit de fluide sous pression n'étant pas défaillant ou vidangé, le fluide sous pression remplit la chambre de pression 26 via le conduit 17B et maintient le piston 24 dans sa position haute en comprimant les ressorts 29.

Dans cette position, le coulisseau 30 est dans sa position de verrouillage grâce à la sollicitation du ressort 31. Les billes 33 sont dans une position saillante par rapport au manchon 22 correspondant à la position de verrouillage du coulisseau 30 dans laquelle l'organe d'accrochage 36 et le manchon 22 sont accouplés.

Chaque bille 33 repose sur le pourtour d'une ouverture respective 32 et se retrouve enserrée latéralement entre la seconde portion annulaire 36B de l'organe d'accrochage 36 et le renfoncement de verrouillage 34B de la gorge 34.

Le piston 24 et l'organe d'accrochage 36 étant dans leur position haute, la portée torique 37 de cet organe se trouve légèrement à l'écart des billes 33 et n'exerce donc aucun effort sur elles.

Cette configuration représentée sur la figure 6 est la configuration de fonctionnement normal dans laquelle le manchon de poussée 22 est maintenu à l'intérieur du corps 20 et n'interfère pas avec le cylindre de frein 2 situé en dessous.

A partir de la position de la figure 6, une vidange ou une défaillance du circuit de fluide sous pression entraîne une mise à la pression atmosphérique de la chambre de pression 26. Les ressorts 29 repoussent alors le piston 24 en direction de sa position basse, ce qui a pour effet d'entraîner l'organe d'accrochage 36 à coulissement le long du manchon de poussée 22. Les billes 33 étant en position saillante, la portée torique 37 de l'organe d'accrochage 36 vient épouser le contour des billes 33 et les entraîne ensuite dans son mouvement, ces billes 33 entraînant à leur tour le manchon de poussée 22 vers le piston 4. Le manchon 22 saille alors du corps 20 et vient repousser le piston 4 du cylindre de frein 2, appliquant ainsi à ce piston 4 un effort de freinage calibré par la raideur des ressorts 29 (on se trouve alors dans la position illustrée par la figure 7). L'actionneur 1 permet ainsi d'imprimer au cylindre de frein 2 un effort de freinage grâce aux ressorts 29 de secours remplaçant la pression du circuit de fluide. La sécurité du véhicule est ainsi assurée et le freinage est maintenu tant que le circuit n'est pas remis en pression (après réparation éventuelle si une défaillance du circuit de fluide a été identifiée).

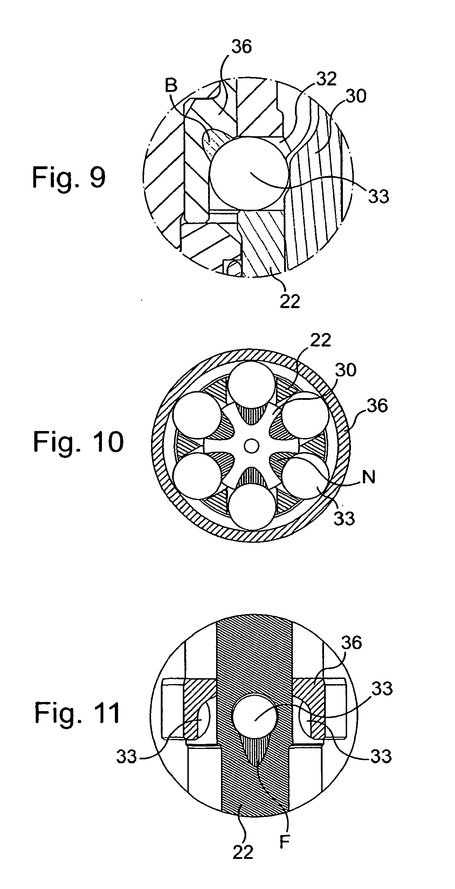

Pendant toute la période durant laquelle la chambre de pression demeure à la pression atmosphérique, l'effort exercé par les ressorts 29 est transmis par les six billes 33 au manchon 22 (figures 9 à 11).

La contrainte de poussée B exercée par la portée torique 37 de l'organe d'accrochage 36 via le ressort 29 sur une bille 33 est répartie sur une ligne de contact en arc de cercle située dans le plan de coupe de la figure 9.

La composante transversale N (vis-à-vis du coulisseau 30) de la contrainte de poussée B est transmise par la bille 33 au coulisseau 30. Celle-ci est répartie selon une ligne de contact en arc de cercle située dans le plan de coupe de la figure 10.

La composante axiale F (vis-à-vis du coulisseau 30) de la contrainte de poussée B est transmise par la bille 33 au manchon de poussée 22. Celle-ci est répartie selon une ligne de contact en arc de cercle située sur le pourtour de l'ouverture 32 et dans le plan de coupe de la figure 11.

Ainsi, pendant toute la période durant laquelle le ressort 29 exerce des efforts importants sur les billes 33 et les éléments périphériques (organe d'accrochage 36, manchon 22 et coulisseau 30), l'ensemble des zones de contact entre une bille 33 et ces éléments est répartie selon une ligne en arc de cercle. Cela permet de répartir les efforts exercés par chacune des billes 33 sur ces éléments périphériques et ainsi d'éviter leur matage au bout d'une certaine période d'utilisation comme cela se produisait avec les actionneurs à billes existants et risquait d'entraîner à terme un blocage complet du mécanisme.

A partir de la position de la figure 7, l'agent de maintenance souhaitant stopper l'effort de freinage exercé par l'actionneur 1 en vue, par exemple, de déplacer le véhicule vers son lieu de maintenance, doit opérer le déverrouillage de l'actionneur 1 grâce au dispositif de déverrouillage 50 (figure 1).

L'enclenchement du dispositif 50 entraine le coulisseau 30 vers sa position de déverrouillage. Chaque bille 33 est alors poussée par la portion torique 37 de l'organe d'accrochage 36 et engage progressivement la rampe 34C, se rapprochant ainsi de l'axe du coulisseau 30 jusqu'à se trouver dans le renfoncement de déverrouillage 34D correspondant à sa position rétractée (partie droite de la figure 1). Le profil de chaque gorge 34 tel que décrit précédemment permet de conserver durant tout le déplacement de la bille 33 correspondante une ligne de contact bille/gorge en arc de cercle.

Dès que les billes 33 occupent leur position rétractée, l'organe d'accrochage 36 devient axialement désaccouplé du manchon 22. N'ayant plus aucune prise sur les billes 33, l'organe d'accrochage 36 coulisse alors axialement par rapport au manchon de poussée 22. Le piston 24 vient alors en butée contre le corps 20 tandis que le manchon de poussée 22 est libre de coulisser le long de son axe longitudinal (on se trouve alors dans la position illustrée par la figure 8). Le piston 4 du cylindre de frein 2 remonte en position haute grâce à la pièce de coin 8 mise en mouvement par la deuxième butée à roulement 11, elle même sollicitée par le ressort 12. Le cylindre de frein 2 est alors en position desserrée.

Après réparation éventuelle du circuit de fluide sous pression, la chambre de pression 26 est à nouveau remplie et mise sous pression, repoussant ainsi le piston 24 et l'organe d'accrochage 36 vers leur position haute (partie gauche de la figure 1). Une fois que l'organe d'accrochage 36 a atteint cette position, l'effort de rappel exercé par le ressort 31, entraine par l'intermédiaire du coulisseau 30, les billes 33 dans leur position saillante.

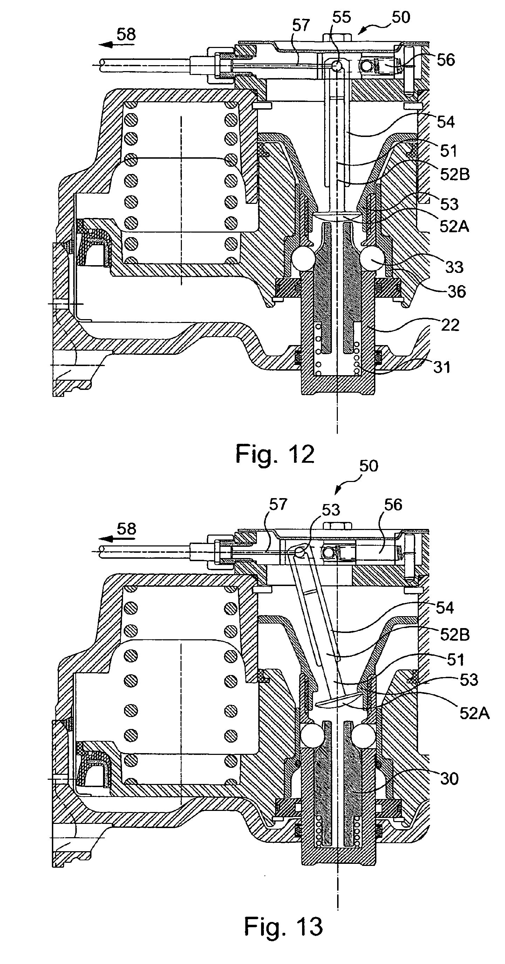

On va maintenant décrire un mode de réalisation préféré d'un dispositif de déverrouillage 50 à l'appui des figures 12 et 13.

Le dispositif 50 comporte un levier 51 comportant une embase bombée 52A dont la concavité est tournée vers le bas et d'une tige 52B s'étendant à partir de l'embase. L'embase bombée 52A est disposée et maintenue entre le sommet du coulisseau 30 et une butée annulaire 53 dont le diamètre interne est légèrement inférieur à celui de l'embase bombée 52A.

Le dispositif 50 comporte également des moyens d'actionnement du levier 51. Ces moyens comportent un fourreau 54 qui enveloppe partiellement la tige 52B et dont l'extrémité fermée est traversée par un tourillon transversal 55.

Ce tourillon 55 est relié à un ressort de rappel 56 qui a tendance à ramener le fourreau 54 et donc le levier 51 dans l'axe du coulisseau 30 (figure 12).

Les moyens d'actionnement comportent également une tige 57 reliée au tourillon 55. Cette tige 57 s'étend transversalement au coulisseau 30 et peut être entrainée en translation suivant la direction 58 grâce à un organe de commande externe tel qu'une poignée (non représenté).

Lorsqu'un agent de maintenance souhaite stopper l'effort de freinage exercé par l'actionneur 1, il lui suffit d'actionner l'organe de commande externe de sorte à déplacer la tige 57 dans la direction 58, cette dernière provoquant via le tourillon 55, le déplacement du fourreau 54 et donc du levier 51 (figure 13).

L'embase bombée 52A du levier 51 étant retenue contre la butée annulaire 53, le fourreau 54 pivote autour du tourillon 55 tandis que le levier 51 coulisse dans ce fourreau 54 et que l'embase bombée 52A bascule de sorte qu'une partie de cette embase vient exercer un effort sur le sommet du coulisseau 30 qui est repoussé dans sa position de déverrouillage (figure 13).

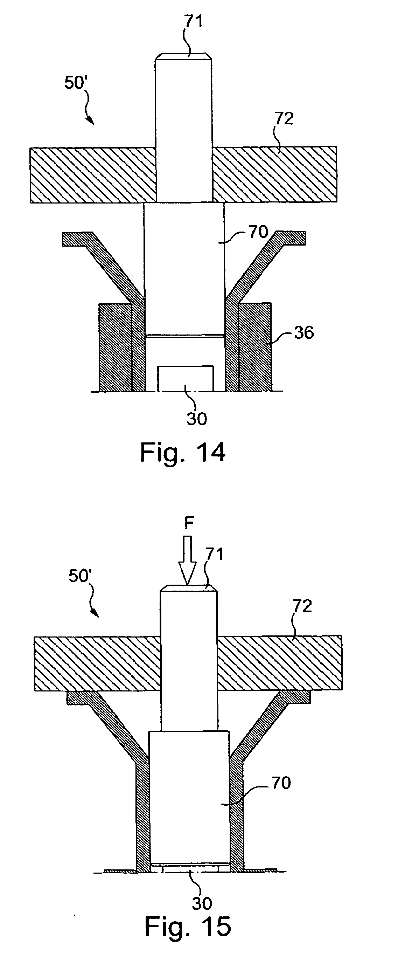

Maintenant, on va décrire une variante à l'appui des figures 14 et 15. Ici, le dispositif de déverrouillage 50' comporte simplement un percuteur coulissant 70 disposé juste au dessus du coulisseau 30 et s'étendant longitudinalement selon l'axe de ce coulisseau (figure 14). Son extrémité 71 opposée au coulisseau 30 saille vers l'extérieur de l'actionneur 1, l'étanchéité avec le reste du mécanisme étant assuré par un soufflet 72.

Pour stopper l'effort de freinage exercé par l'actionneur 1, l'opérateur doit simplement exercer un effort F sur l'extrémité saillante 71 du percuteur 70 en direction du coulisseau 30 (par exemple à l'aide d'une masse), ce qui a pour effet de déplacer le percuteur 70 et de repousser le coulisseau 30 dans sa position de déverrouillage (figure 15).

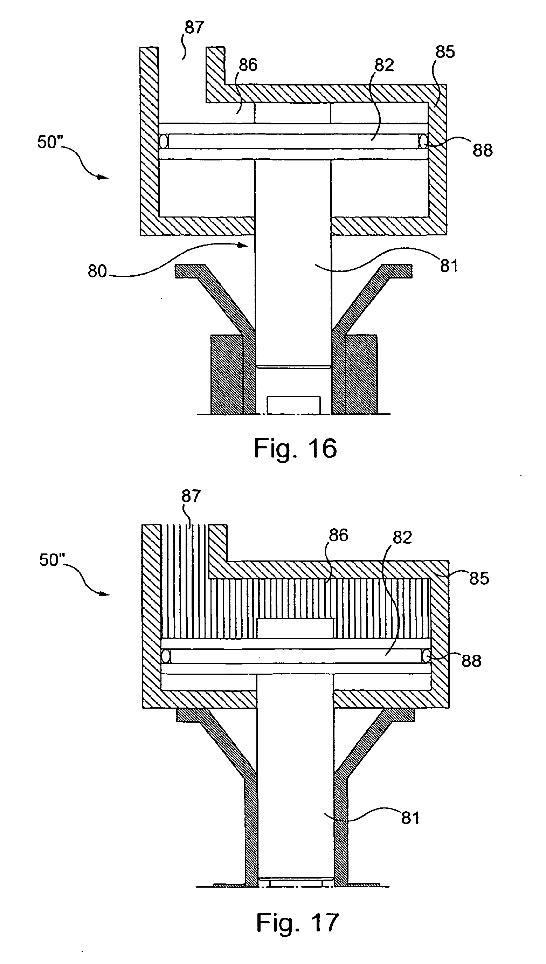

Maintenant, on va décrire une autre variante à l'appui des figures 16 et 17. Ici, le dispositif de déverrouillage 50" qui est de type pneumatique, comporte un organe de commande 80 constitué d'un corps cylindrique 81 et d'un piston circulaire 82 à l'une de ses extrémités qui s'étend transversalement au corps 81.

L'extrémité du corps 81 opposée au piston 82 est disposée juste au dessus du coulisseau 30 et le corps 81 s'étend longitudinalement selon l'axe de ce coulisseau 30. Le piston 82 est monté mobile dans un cylindre 85 solidaire du corps 20 et délimitant avec le piston 82 une chambre de pression 86. Cette chambre de pression 86 peut être alimentée en fluide sous pression par un conduit 87, l'étanchéité entre le piston 85 et le cylindre 85 étant garantie par un joint 88.

En l'absence de fluide sous pression dans la chambre 86, Le piston 82 est dans sa position haute (figure 16) dans laquelle aucun effort n'est exercé par le corps 81 sur le coulisseau 30.

Pour stopper l'effort de freinage exercé par l'actionneur 1, l'opérateur doit simplement commander l'arrivée de fluide sous pression par le conduit 87, ce qui a pour effet de déplacer le piston 82 et plus généralement l'élément d'actionnement 80 dont le corps 81 vient repousser le coulisseau 30 dans sa position de déverrouillage (figure 17).

Dans une autre variante non représentée, le dispositif de déverrouillage comporte un percuteur actionnable par un ressort retenu en position comprimée par une goupille.

Plus généralement, de nombreuses autres variantes sont possibles en fonction des circonstances, et l'on rappelle à cet égard que l'invention ne se limite pas aux exemples décrits et représentés.

## Revendications

1. Actionneur de frein de parking ou de secours adapté à verrouiller un cylindre de frein ferroviaire (2), cet actionneur comportant :
- un manchon de poussée (22) adapté à agir sur ledit cylindre de frein (2) ;
- un coulisseau (30) monté mobile axialement dans le manchon de poussée (22) entre une position de verrouillage et une position de déverrouillage ;
- un piston (24) adapté à être entrainé par des moyens élastiques (29) et lié à un organe d'accrochage (36) ;
- une pluralité de billes (33) disposées dans une ouverture (32) du manchon (22) entre le coulisseau (30) et l'organe d'accrochage (36), commandées en position par une surface latérale du coulisseau (30) pour :
- lorsque le coulisseau (30) est en position de verrouillage, adopter une position saillante vis-à-vis du manchon (22) où elles sont engagées dans un renfoncement (36B) de l'organe d'accrochage (36) ; et
- lorsque le coulisseau (30) est en position de déverrouillage, adopter une position rétractée vis-à-vis du manchon (22) où elles sont dégagées de l'organe d'accrochage (36) ;
grâce à quoi lorsque le coulisseau (30) est en position de verrouillage, l'organe d'accrochage (36) entraine axialement le manchon de poussée (22) et lorsque le coulisseau (30) est en position de déverrouillage, l'organe d'accrochage (36) est axialement désaccouplé du manchon de poussée (22) ;
**caractérisé en ce que** la surface latérale du coulisseau (30) comporte pour chaque bille (33) un renfoncement de verrouillage (34B) respectif pour recevoir à engagement cette bille (33) lorsque le coulisseau (30) est en position de verrouillage, chaque dit renfoncement de verrouillage (34B) étant orienté axialement et présentant une section transversale en arc de cercle de rayon semblable à celui de la bille (33), grâce à quoi la bille (33) est en contact avec la surface dudit renfoncement de verrouillage (34B) sur une ligne en arc de cercle.

2. Actionneur selon la revendication 1, **caractérisé en ce que** ladite surface latérale comporte, pour chacune des billes (33), un renfoncement de déverrouillage (34D) respectif pour recevoir à engagement cette bille (33) lorsque le coulisseau (30) est en position de déverrouillage, chaque dit renfoncement de déverrouillage (34D) étant orienté axialement et présentant une section transversale en arc de cercle de rayon semblable à celui de la bille (33), grâce à quoi la bille (33) est en contact avec la surface dudit renfoncement de déverrouillage (34D) sur une ligne en arc de cercle.

3. Actionneur selon la revendication 2, **caractérisé en ce que** ladite surface latérale comporte, pour chacune des billes (33), une gorge d'accueil (34) orientée axialement et comportant ledit renfoncement de verrouillage (34B), ledit renfoncement de déverrouillage (34D) et une rampe (34C) entre ledit renfoncement de verrouillage (34B) et ledit renfoncement de déverrouillage (34D).

4. Actionneur selon la revendication 3, **caractérisé en ce que** ladite rampe (34C) présente une section transversale en arc de cercle de rayon semblable à celui de la bille (33), grâce à quoi la bille (33) est en contact avec la surface de ladite rampe (34C) sur une ligne en arc de cercle.

5. Actionneur selon l'une des revendications 3 ou 4, **caractérisé en ce que** ladite rampe (34C) est inclinée vis-à-vis de l'axe du coulisseau 30 selon une pente d'environ 45°.

6. Actionneur selon l'une des revendications 1 à 5, **caractérisé en ce que** ledit organe d'accrochage (36) comporte une portée torique (37) présentant une section transversale en arc de cercle de rayon semblable à celui des billes (33), grâce à quoi le contact entre chaque bille (33) et ladite portée torique (37) s'effectue selon une ligne en arc de cercle.

7. Actionneur selon l'une des revendications 1 à 6, **caractérisé en ce que** lesdites ouvertures (32) sont circulaires et présentent un diamètre semblable à celui des billes (33), grâce à quoi chaque bille (33) est en contact avec le pourtour d'une respective ouverture (32) sur une ligne en arc de cercle.

8. Actionneur selon l'une des revendications 1 à 7, **caractérisé en ce qu'**il comporte six dites billes (33) disposées respectivement dans six dites ouvertures circulaires (32) réparties régulièrement sur le pourtour dudit manchon (22).

9. Actionneur selon l'une des revendications 1 à 8, **caractérisé en ce que** lesdits moyens élastiques sont des ressorts (29).

10. Actionneur selon l'une des revendications 1 à 9, **caractérisé en ce que** ledit actionneur comporte un dispositif de déverrouillage (50 ; 50' ; 50") adapté à entrainer le coulisseau (30) de sa position de verrouillage à sa position de déverrouillage.

11. Actionneur selon la revendication 10, **caractérisé en ce que** ledit dispositif de déverrouillage (50) comporte un levier (51) présentant une embase bombée (52A) en contact avec le sommet dudit coulisseau (30), ledit levier (51) étant adapté à basculer grâce à un organe de commande de sorte à repousser ledit coulisseau (30) en position de déverrouillage.

12. Actionneur selon la revendication 11, **caractérisé en ce que** ledit dispositif de déverrouillage (50) comporte également des moyens d'actionnement (54, 55, 57) disposés entre ledit levier (51) et ledit organe de commande.

13. Actionneur selon la revendication 10, **caractérisé en ce que** ledit dispositif de déverrouillage (50' ; 50") comporte un corps (70 ; 81) disposé dans l'axe dudit coulisseau (30) et adapté à le repousser en position de déverrouillage grâce à un organe de commande.

14. Actionneur selon la revendication 13, **caractérisé en ce que** ledit organe de commande est une extrémité (71) dudit corps, adapté à être frappé par une masse.

15. Actionneur selon la revendication 13 **caractérisé en ce que** ledit organe de commande est un piston pneumatique.

## Claims

1. A parking or emergency brake actuator adapted to lock a rail transport brake cylinder (2), said actuator comprising:
- a thrust sleeve (22) adapted to act on said brake cylinder (2);
- a slide (30) moveably mounted axially in the thrust sleeve (22) between a locking position and an unlocking position;
- a piston (24) adapted to be driven by elastic means (29) and linked to an anchoring part (36);
- a plurality of balls (33) disposed in an opening (32) of the sleeve (22) between the slide (30) and the anchoring part (36), which are caused to move into position by a lateral surface of the slide (36) in order:
- when the slide (30) is in locking position, to adopt a projecting position in relation to the sleeve (22) in which they are engaged in a recess (36B) of the anchoring part (36); and
- when the slide (30) is in unlocking position, to adopt a retracted position in relation to the sleeve (22) in which they are clear of the anchoring part (36);
whereby, when the slide (30) is in locking position, the anchoring part (36) axially drives the thrust sleeve (22) and when the slide (30) is in unlocking position, the anchoring part (36) is axially uncoupled from the thrust slide (22);
**characterized in that** the lateral surface of the slide (30) comprises for each ball (33) a respective locking recess (34B) to engagingly receive that ball (33) when the slide (30) is in locking position, each said locking recess (34B) being axially oriented and having a circle arc shaped cross-section of radius similar to that of the ball (33), whereby the ball (33) is in contact with the surface of said locking recess (34B) on a circle arc shaped line.

2. An actuator according to claim 1, **characterized in that** said lateral surface comprises, for each of the balls (33), a respective unlocking recess (34D) to engagingly receive said ball (33) when the slide (30) is in unlocking position, each said unlocking recess (34D) being axially oriented and having a circle arc shaped cross-section of radius similar to that of the ball (33), whereby the ball (33) is in contact with the surface of said unlocking recess (34D) on a circle arc shaped line.

3. An actuator according to claim 2, **characterized in that** said lateral surface comprises, for each of the balls (33), an axially oriented reception channel (34) comprising said locking recess (34B), said unlocking recess (34D) and a slant (34C) between said locking recess (34B) and said unlocking recess (34D).

4. An actuator according to claim 3, **characterized in that** said slant (34C) has a circle arc shaped cross-section of radius similar to that of the ball (33), whereby the ball (33) is in contact with the surface of said slant (34C) on a circle arc shaped line.

5. An actuator according to one of claims 3 or 4, **characterized in that** said inclined plane (34C) is inclined relative to the axis of the slide (30) with a slope of approximately 45°.

6. An actuator according to one of claims 1 to 5, **characterized in that** said anchoring part (36) comprises a toroidal bearing surface (37) having a circle arc shaped cross-section of radius similar to that of the balls (33), whereby the contact between each ball (33) and said toroidal bearing surface (37) takes place along a line of circle arc shape.

7. An actuator according to one of claims 1 to 6, **characterized in that** said openings (32) are circular and of diameter substantially similar to that of the balls (33), whereby each ball (33) is in contact with the periphery of a respective opening (32) on a line of circle arc shape.

8. An actuator according to one of claims 1 to 7, **characterized in that** it comprises six said balls (33) disposed respectively in six said circular openings (32) regularly distributed around the periphery of said sleeve (22).

9. An actuator according to one of claims 1 to 8, **characterized in that** said elastic means are springs (29).

10. An actuator according to one of claims 1 to 9, **characterized in that** said actuator comprises an unlocking device (50; 50'; 50") adapted to drive the slide (30) from its locking position to its unlocking position.

11. An actuator according to claim 10, **characterized in that** said unlocking device (50) comprises a lever (51) having a dome-shaped base (52A) in contact with the apex of said slide (30), said lever (51) being adapted to tip by virtue of an operating part so as to push away said slide (30) into unlocking position.

12. An actuator according to claim 11, **characterized in that** said unlocking device (50) also comprises actuating means (54, 55, 57) disposed between said lever (51) and said operating part.

13. An actuator according to claim 10, **characterized in that** said unlocking device (50' ; 50") comprises a body (70; 81) disposed in line with said slide (30) and adapted to push it away into unlocking position by virtue of an operating part.

14. An actuator according to claim 13, **characterized in that** said operating part is an end (71) of said body, adapted to be struck by a mass.

15. An actuator according to claim 13, **characterized in that** said operating part is a pneumatic piston.

## Patentansprüche

1. Stellglied für Feststell- oder Notbremse, das einen Schienenbremszylinder (2) festzustellen vermag, wobei das Stellglied umfasst.
- eine Schubhülse (22), die auf den Bremszylinder (2) einzuwirken vermag;
- einen Schieber (30), der in der Schubhülse (22) zwischen einer Feststellposition und einer Löseposition axial beweglich montiert ist;
- einen Kolben (24), der durch elastische Mittel (29) angetrieben und mit einem Sperrorgan (36) verbunden vermag;
- mehrere Kugeln (33), die in einer Öffnung (32) der Hülse (22) zwischen dem Schieber (30) und dem Sperrorgan (36) angeordnet sind und durch eine Seitenfläche des Schiebers (30) in Stellung gesteuert werden, um:
- eine bezüglich der Hülse (22) vorspringende Position einzunehmen, in der sie in eine Vertiefung (36B) des Sperrorgans (36) eingreifen, wenn sich der Schieber (30) in der Feststellposition befindet; und
- eine bezüglich der Hülse (22) eingezogene Position einzunehmen, in der sie vom Sperrorgan (36) gelöst sind, wenn sich der Schieber (30) in der Löseposition befindet;
wodurch das Sperrorgan (36) die Schubhülse (22) axial an sich treibt, wenn sich der Schieber (30) in der Feststellposition befindet, und das Sperrorgan (36) von der Schubhülse (22) axial entkoppelt ist, wenn sich der Schieber (30) in der Löseposition befindet;
**dadurch gekennzeichnet, dass** die Seitenfläche des Schiebers (30) für jede Kugel (33) jeweils eine Feststellvertiefung (34B) aufweist, um im Eingriff die Kugel (33) aufzunehmen, wenn sich der Schieber (30) in der Feststellposition befindet, wobei jede Feststellvertiefung (34B) axial ausgerichtet ist und einen kreisbogenförmigen Querschnitt mit einem ähnlichen Radius wie die Kugel (33) aufweist, wodurch die Kugel (33) mit der Oberfläche der Feststellvertiefung (34B) auf einer Kreisbogenlinie in Kontakt ist.

2. Stellglied nach Anspruch 1,
**dadurch gekennzeichnet, dass** die Seitenfläche für jede Kugel (33) jeweils eine Lösevertiefung (34D) aufweist, um im Eingriff die Kugel (33) aufzunehmen, wenn sich der Schieber (30) in der Löseposition befindet, wobei jede Lösevertiefung (34D) axial ausgerichtet ist und einen kreisbogenförmigen Querschnitt mit einem ähnlichen Radius wie die Kugel (33) aufweist, wodurch die Kugel (33) mit der Oberfläche der Lösevertiefung (34B) auf einer Kreisbogenlinie in Kontakt ist.

3. Stellglied nach Anspruch 2,
**dadurch gekennzeichnet, dass** die Seitenfläche für jede Kugel (33) eine Aufnahmerille (34) aufweist, die axial ausgerichtet ist und die Feststellvertiefung (34B), die Lösevertiefung (34D) und eine Rampe (34C) zwischen der Feststellvertiefung (34B) und der Lösevertiefung (34D) umfasst.

4. Stellglied nach Anspruch 3,
**dadurch gekennzeichnet, dass** die Rampe (34C) einen kreisbogenförmigen Querschnitt mit einem ähnlichen Radius wie die Kugel (33) aufweist, wodurch die Kugel (33) mit der Oberfläche der Rampe (34C) auf einer Kreisbogenlinie in Kontakt ist.

5. Stellglied nach einem der Ansprüche 3 oder 4,
**dadurch gekennzeichnet, dass** die Rampe (34C) schräg zur Achse des Schiebers (30) mit einer Neigung von ungefähr 45° verläuft.

6. Stellglied nach einem der Ansprüche 1 bis 5,
**dadurch gekennzeichnet, dass** das Sperrorgan (36) eine torische Auflagefläche (37) mit einem kreisbogenförmigen Querschnitt mit einem ähnlichen Radius wie die Kugeln (33) aufweist, wodurch der Kontakt zwischen jeder Kugel (33) und der torischen Auflagefläche (37) entlang einer Kreisbogenlinie erfolgt.

7. Stellglied nach einem der Ansprüche 1 bis 6,
**dadurch gekennzeichnet, dass** die Öffnungen (32) rund sind und einen ähnlichen Durchmesser wie die Kugeln (33) aufweisen, wodurch jede Kugel (33) mit dem Umfang einer jeweiligen Öffnung (32) auf einer Kreisbogenlinie in Kontakt ist.

8. Stellglied nach einem der Ansprüche 1 bis 7,
**dadurch gekennzeichnet, dass** es sechs Kugeln (33) umfasst, die jeweils in sechs runden Öffnungen (32) angeordnet sind, die über den Umfang der Hülse (22) gleichmäßig verteilt sind.

9. Stellglied nach einem der Ansprüche 1 bis 8,
**dadurch gekennzeichnet, dass** die elastischen Mittel Federn (29) sind.

10. Stellglied nach einem der Ansprüche 1 bis 9,
**dadurch gekennzeichnet, dass** das Stellglied eine Löseeinrichtung (50; 50'; 50") aufweist, die den Schieber (30) aus seiner Feststellposition in seine Löseposition zu bringen vermag.

11. Stellglied nach Anspruch 10,
**dadurch gekennzeichnet, dass** die Löseeinrichtung (50) einen Hebel (51) mit einer gewölbten Basis (52A) aufweist, die mit dem Scheitel des Schiebers (30) in Kontakt ist, wobei der Hebel (51) mittels eines Steuerungselements solchermaßen gekippt zu werden vermag, dass der Schieber (30) in die Löseposition zurückgestellt wird.

12. Stellglied nach Anspruch 11,
**dadurch gekennzeichnet, dass** die Löseeinrichtung (50) auch Betätigungsmittel (54, 55, 57) umfasst, die zwischen dem Hebel (51) und dem Steuerungselement angeordnet sind.

13. Stellglied nach Anspruch 10,
**dadurch gekennzeichnet, dass** die Löseeinrichtung (50'; 50") einen Körper (70; 81) umfasst, der in der Achse des Schiebers (30) angeordnet ist und dieses mittels eines Steuerungselements in die Löseposition zurückzustellen vermag.

14. Stellglied nach Anspruch 13,
**dadurch gekennzeichnet, dass** das Steuerungselement ein Endstück (71) des Körpers ist, auf das mit einem Hammer geschlagen vermag.

15. Stellglied nach Anspruch 13,
**dadurch gekennzeichnet, dass** das Steuerungselement ein Pneumatikkolben ist.
